# EUROPEAN PATENT APPLICATION

(11) **EP 2 509 012 A2**
(43) Date of publication of application: **10.10.2012**
(21) Application number: 10834805.3
(22) Date of filing: 06.12.2010
(51) Int. Cl.: G06F 19/00, G06F 17/00

(54) **DEVICE AND METHOD FOR INDUCING USE**

(30) Priority: 04.12.2009 KR 20090119987
(71) Applicant: Future Robot Co., Ltd., Gyeonggi-do 443-766 (KR)
(72) Inventor: SONG, Se Kyung, Seongnam-si Gyeonggi-do 463-060 (KR); KIM, Hyun, Suwon-si Gyeonggi-do 443-470 (KR)
(74) Representative: Collin, Jérôme
(86) International application number: PCT/KR2010/008670
(87) International publication number: WO 2011/068390

(57) **Abstract**

The device for inducing use according to the present invention comprises an input unit for receiving user input, an event storage unit for storing a plurality of events which can be perceived by the user, an event extraction unit for extracting one of the events stored in the event storage unit if the user input is sensed at the input unit, and an event expression unit for displaying the event extracted from the event extraction unit to the user; thereby making it possible to induce the user to use the input unit in an enjoyably engaged fashion.

## Description

### TECHNICAL FIELD

The present invention relates to an apparatus and method for inducing use, and more specifically, to an apparatus and method for inducing use, which stimulates and sustains interest and attention of a user for using a certain device and furthermore persuades the user to approach the device to facilitate using the device.

### BACKGROUND ART

Currently, studies on an emotional system for constructing an emotional model from user commands, surrounding environments and sensor information, and controlling motions based on the emotional model are under progress.

Systems for generating or selecting and then expressing a feeling or a motion using various sensor information collected from visual, acoustic and tactile sensors are developed in the form of a pet robot or an intelligent robot, and studies for improving functions of an emotion engine which expresses further natural motions by mimicking an animal or based on personified emotion, or a system related thereto are steadily progressed.

In addition, functions of a sensor device for sensing user input and state changes are improved for natural interactions between human beings and robots, and techniques for grasping intention of a user using such sensors are tried to be developed. Even in a robot driving apparatus, various studies on driver techniques for expressing natural behaviors are progressed.

Meanwhile, in order to faithfully express a feeling based on the emotional information described above, development of an internal system for controlling a hardware apparatus, as well as development of the hardware apparatus itself, is important. Particularly, the system needs to be developed in an independently operable form, not in a configuration dependent on a specific robot or system. However, until present, an emotion expression system of an independently operable form has not been developed.

Accordingly, in order to naturally and realistically drive a hardware driving apparatus depending on a situation and a feeling, required is development of an emotion expression system independently operable regardless of a specific robot or system through closely related controls between a physical apparatus and an internal system which drives and operates the physical apparatus.

Furthermore, it needs to study a method of using emotional expressions in order to guide a user to a robot or a kiosk and persuade the user to use the function provide by the robot or the kiosk, more than a method simply expressing a feeling.

### DISCLOSURE OF INVENTION

### TECHNICAL PROBLEM

Therefore, the present invention has been made in view of the above problems, and it is an object of the present invention to provide an apparatus and method for inducing use, in which a variety of events are expressed depending on a distance to the user, time of handling the device and outer information of the user so that the user is persuaded to use the device.

### TECHNICAL SOLUTION

To accomplish the above object, according to one aspect of the present invention, there is provided an apparatus for inducing use, the apparatus including: an input unit for receiving a user input; an event storage unit for storing a plurality of events recognizable by a user; an event extraction unit for extracting one of the events stored in the event storage unit if the user input is sensed at the input unit; and an event expression unit for displaying the event extracted by the event extraction unit to the user, in which the event extraction unit may extract an event different from an event displayed through the event expression unit at a time point where the user input is sensed.

At this point, the event extraction unit may select and extract the event depending on input contents of the user.

In addition, if an additional user input is not sensed for a predetermined time period after the user input is sensed, the event extraction unit may extract an event different from the event displayed through the event expression unit at a time point where the predetermined time period expires. Here, the apparatus for inducing use may further include: a user information sensing unit for sensing outer information of the user; and a reference time setting unit for setting the predetermined time period depending on the sensed outer information of the user.

In addition, the event extraction unit may extract an event different from the event displayed through the event expression unit at a time point when a second predetermined time period expires at every second predetermined time periods after the predetermined time period is elapsed. At this point, the apparatus for inducing use may further include: a user information sensing unit for sensing outer information of the user; and a reference time setting unit for setting at least either the predetermined time period or the second predetermined time period depending on the sensed outer information of the user.

In addition, the apparatus for inducing use may further include: a user information sensing unit for sensing outer information of the user; and a threshold determination unit for extracting a response of the user based on the sensed outer information of the user, and determining whether or not the response of the user exceeds a threshold value, in which the event extraction unit may extract a response event depending on the response of the user if the response of the user exceeds the threshold value, and the event expression unit may display the response event for a third predetermined time period.

In addition, the apparatus for inducing use may further include: a distance measurement unit for measuring a distance to the user; and a distance classification unit for classifying the distance measured by the distance measurement unit into a persuasion stage section corresponding to a distance section in which the user cannot handle the input unit and a preparation stage section corresponding to a distance section in which the user may handle the input unit, in which the event extraction unit may extract an event for guiding an unspecified user to the preparation stage section from the persuasion stage section and extract an event for specifying a user and persuading the user to use the input unit in the preparation stage section. Here, the apparatus for inducing use may further include: a user information sensing unit for sensing outer information of the user in the preparation stage section, in which the event storage unit may classify and store one or more events recognizable by the user into a plurality of event groups corresponding to the outer information of the user, and the event extraction unit may select an event group corresponding to the sensed outer information of the user and extracts an event stored in the selected event group. In addition, the apparatus for inducing use may further include: a menu display unit for displaying at least either contents corresponding to an object of the input unit or a method of using the input unit. At this point, the menu display unit may be formed together with the event expression unit as a single body.

On the other hand, a method of inducing use according to the present invention may include: a persuasion stage of displaying, on an event expression unit, an advertisement event for persuading an unspecified user positioned farther than a predetermined distance to approach an input unit; a preparation stage of displaying, on the event expression unit, a persuasion event for persuading a user positioned within the predetermined distance to use the input unit; and an action stage of extracting and displaying, on the event expression unit, an event stored in an event storage unit depending on sensed contents of the input unit when the user uses the input unit if the user has started using the input unit.

At this point, the action stage may extract and display an event different from a currently displayed event on the event expression unit if the user does not make an additional input for the predetermined time period.

In addition, the method of inducing use may further include, after the action stage, a payment stage of extracting and displaying an event stored in the event storage unit on the event expression unit depending on sensed contents of the input unit when the user uses the input unit as a payment means in order to make a payment.

In addition, a method of inducing use according to the present invention may include the steps of: a) extracting and displaying an event stored in an event storage unit on an event expression unit depending on sensed input of the user if a user input is sensed; and b) extracting and displaying an event different from the displayed event on the event expression unit if an additional user input is not sensed for a predetermined time period after the user input is sensed,

At this point, the method of inducing use may further include, after step b), the steps of extracting an event different from the event displayed through the event expression unit at a time point when a second predetermined time period expires at every second predetermined time periods after the predetermined time period is elapsed, and displaying the extracted event.

In addition, the method of inducing use may further include, before step a), the steps of: measuring a distance to the user; and displaying an advertisement event if the distance measured is in a persuasion stage section; and displaying an persuasion event if the distance measured is in a preparation stage section.

In addition, the method of inducing use may further include, after step b), the step of, if use of the user is completed, analyzing a time pattern between the user inputs by a reference time setting unit, and setting the predetermined time period based on a result of the analysis.

In addition, the method of inducing use may further include, after the step of displaying an event using the second predetermined time period, the step of, if use of the user is completed, analyzing a time pattern between the user inputs by the reference time setting unit, and setting at least either of the predetermined time period or the second predetermined time period based on a result of the analysis.

### ADVANTAGEOUS EFFECTS

The apparatus and method for inducing use described above may express a variety of events to a user depending on a distance to the user, time of handling the input unit by the user and outer information of the user

As a result, the user may be easily guided to the input unit provided in the use inducing apparatus, and the user is less likely to change his or her mind while using the input unit and abandon using the input unit.

### BRIEF DESCRIPTION OF THE DRAWINGS

FIG. 1 is a block diagram showing a use inducing apparatus related to the present invention.

FIG. 2 is a view schematically showing an operation of a use inducing apparatus related to the present invention.

FIG. 3 is a view schematically showing an operation of a persuasion step in a use inducing method related to the present invention.

FIG. 4 is a view schematically showing an operation of a preparation step in a use inducing method related to the present invention.

FIG. 5 is a view schematically showing an operation of a motion step in a use inducing method related to the present invention.

FIG. 6 is a view schematically showing an operation of a payment step in a use inducing method related to the present invention.

FIG. 7 is a flowchart illustrating a first half of a use inducing method related to the present invention.

FIG. 8 is a flowchart illustrating a last half of a use inducing method related to the present invention.

### BEST MODE FOR CARRYING OUT THE INVENTION

Hereinafter, a use inducing apparatus and method related to the present invention will be described in further detail with reference to the drawings.

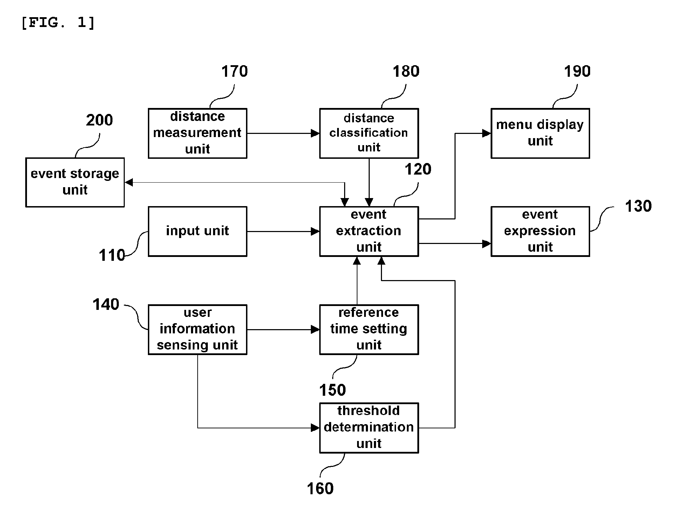

FIG. 1 is a block diagram showing a use inducing apparatus related to the present invention.

The use inducing apparatus shown in FIG. 1 includes an input unit 110 for receiving user input, an event storage unit 200 for storing a plurality of events that can be perceived by the user, an event extraction unit 120 for extracting one of the events stored in the event storage unit if the user input is sensed at the input unit, and an event expression unit 130 for displaying the event extracted from the event extraction unit to the user.

The input unit 110 is an element for receiving user input, and a variety of methods, such as a keypad, a keyboard, a touch screen and the like, can be used. The object of the use inducing apparatus is to induce the user to approach the input unit and to persuade the approached user to use the input unit. When the user uses the input unit, there will be an object to achieve through the input unit. Such an object corresponds to a menu or the like for ordering certain merchandise or service. Accordingly, the input unit may be generally included in an order menu, i.e., in an object management system or the like for managing certain objects.

In the embodiment, the use inducing apparatus is used to receive a branched output signal of the input unit described above and induce the user to use the input unit. The use inducing apparatus may include only the input unit or all of object management system. In the former case, a communication module for transmitting signals of the input unit to the object management system can be provided.

The event storage unit 200 stores a variety of events that can be perceived by the user. There may be a variety of methods for guiding the user to the input unit and inducing the user to use the input unit until a deired object is achieved, and among the methods, emotional expression is used in the embodiment. The use inducing apparatus may be applied to a robot or a koisk, and it is difficult for the robot or the kiosk to express various feelings like a human being. Accordingly, a plurality of events appropriate to an output means (corresponding to the event expression unit) of the robot or the kiosk where the use inducing apparatus is mounted is defined, and the events are stored and used in the event storage unit.

The events are specifically stored in the form of data, analyzed and processed by the event expression unit, and displayed to the user. When an event is displayed outside, it is expressed as a facial expression, an emotional behavior, an emotional voice, an emotional character or the like. Through the facial expression, feelings such as joy, sorrow, humor, nervousness, anger, gladness and the like can be expressed.

The emotional behavior corresponds to a gesture and may express greetings expressing welcome. Since the emotional behavior requires a motion, it is advantageous to apply the emotional behavior to a robot having arms and legs for making external motions, rather than to a kiosk.

The emotional voice expresses a feeling through a sound. Specifically, feelings such as joy, sorrow, anger, and scare can be expressed through sounds of laughter, sounds of cry, sounds of anger, and echoic words feeling fear. In addition, other than these, feelings can be expressed through a language, not an echoic word, such as 'Glad to see you', 'Happy to meet you' or the like.

The emotional character expresses a feeling in characters through a display unit such as an LED.

In addition, the event may be objective information provided to a user, in addition to expression of subjective feelings. Specifically, the event may include information characters or information voices such as 'Menu 1 is selected'.

The event extraction unit 120 extracts one of events stored in the event storage unit if the user input is sensed at the input unit. In other words, an event is extracted when the user handles the input unit. It should be noted that an event extracted at this point is not any one of a smiling face, a sound of laughter, and a gesture of shaking shoulders caused by the laughter.

Here, an event is a plurality of events used for expressing "one feeling", and the number of events used for one feeling is determined by the event expression unit. For example, a kiosk may output a facial expression through a display unit or a sound of laughter through a speaker as a way of expressing joy, but it cannot express an emotional behavior such as a gesture. Of course, a human body is displayed on a display unit, and a gesture can be expressed through a displayed human body. However, in this case, the facial expression can be regarded as being included in emotional characters, and thus the gesture is different from a gesture performed by a device itself. Accordingly, in the case of the kiosk, one event can be two events including a facial expression and a sound of laughter expressing joy. In the case of a robot, a gesture can be added to the facial expression and the sound of laughter.

In addition, the event extraction unit 120 extracts an event when a user handles the input unit, and the event extracted at this point may be the same as the event that is already displayed by the event expression unit. In this case, from the viewpoint of a user, it looks like repeatedly displaying the same event although the user handles the input unit, and thus interest in the device can be diminished.

Accordingly, it is general that if a different feeling is expressed when the input unit 110 is pressed, the user may be curious about the event expressed by the next handling. If this is used, the user will desire to continue handling the input unit. Considering this, the event extraction unit may extract an event different from the event current display through the event expression unit at the point of sensing a user input. According to this, since a different event is displayed each time when the user handles the input unit, the user will continue to be interested in handling the input unit.

Meanwhile, the input unit 110 cannot be configured to force the user to select a certain menu, and in the case of a restaurant for example, the input unit should be provided with a means for canceling selection of a menu by the user although the user has selected the menu.

An event can be used to persuade the user not to voluntarily do a behavior against the object of inducing use of the device, such as canceling a selected menu described above. To this end, the event extraction unit may extract an event by selection depending on input contents of the user. For example, if the input contents of the user are about canceling a menu, the event expresses sorrow or reluctance to induce the user not to cancel the menu by himself or herself.

In addition, when the user handles the input unit by selecting a certain menu one by one, an event such as great joy is displayed, and thus the user is induced to select a menu. To this end, current input contents should be analyzed, and in addition, it should be possible to determine whether the current input contents are a behavior appropriate to the object of inducing use of the device or inappropriate to the object by comparing previous input contents with the current input contents. Events to be displayed in each case of determination should be prepared in advance. The events to be displayed in each case are prepared based on data acquired by experiments and can be updated.

The event expression unit 130 analyzes an event extracted by the event extraction unit and expresses the event in a variety of means. To this end, the event expression unit includes a means for analyzing an event transmitted from the event extraction unit, a display unit for displaying the analyzed event, a speaker, arms, legs, wheels, a face and the like.

In the case of a robot having eyes, a nose, a mouse and a facial structure, a facial expression among the events can be expressed by modifying the eyes and the mouse. In the case of a kiosk or a robot having a display unit or an LED formed as a face instead of a shape of face, a facial expression can be expressed through the display unit or the LED.

In addition, in the case of a robot having arms and legs, motions related to feelings can be expressed by the motions of the arms or legs. Specifically, a gesture such as forming a heart shape or imitating a kiss using a hand and the mouse can be made. In addition, a sound of cry, a sound of laughter, a sound of sneer or a meaningful sound that can be perceived by a user, which express sorrow or joy, can be expressed through a speaker.

An event extracted by the event extraction unit is described above, and accordingly, the event expression unit which shows the user the event extracted by the event extraction unit may express all or some of facial expressions, emotional behaviors, emotional voices and emotional characters simultaneously.

Meanwhile, if an additional user input is not sensed for a predetermined time period after a user input is sensed, the event extraction unit may extract an event different from the event currently displayed through the event expression unit when the predetermined time period expires. A user may spend time between handlings when handling the input unit. This can be a case where the user is not accustomed to handling the input unit or ponders while handling the input unit. In this case, if the same event is displayed until the input unit is additionally handled, interest of the user may be reduced by half.

Accordingly, if next handling is not sensed for a predetermined time period after the input unit is handled, it is preferable to display an event different from the currently displayed event. Accordingly, the user is not boring, and furthermore it is possible to urge the user in pondering to promptly perform next handling using the newly display event. At this point, the predetermined time period may be a time value set by an installer of the use inducing apparatus or set when the apparatus is shipped from the factory.

In addition, the predetermined time period may be set differently depending on a user using the input unit. For example, it is general that seniors tend to handle the input unit at a slow pace, and the predetermined time period may be set using at least one piece of outer information of the user, such as an age, a height, a sex, a facial expression, a voice, and a gesture. To this end, the use inducing apparatus may further include a user information sensing unit 140 for sensing the outer information of the user, and a reference time setting unit 150 for setting the predetermined time depending on the sensed outer information of the user. The user information sensing unit may include an input means such as a camera or a microphone for sensing the outer information of the user and an information analysis means for analyzing output signals of the input means.

A method of displaying an event different from a currently displayed event if an additional input is not sensed for a predetermined time period is described above. At this point, if the former event is displayed continuously, the problem is the same as the one that occurs when the currently displayed event is displayed continuously. In order to prevent this problem, the event extraction unit may extract an event different from the event displayed through the event expression unit at the time point when a second predetermined time period expires at every second predetermined time periods after the predetermined time period is elapsed.

For example, in the case where the predetermined time period is 30 seconds, and the second predetermined time period is 10 second, if an additional input is not sensed for 30 seconds after the user handles the input unit, an event different from the currently displayed event is extracted and displayed. Then, if an additional input is not sensed for 10 seconds thereafter, another different event is extracted and displayed, and this procedure is repeated thereafter. Accordingly, the user sees or hears continuously changing events. The second predetermined time period also can be set based on the outer information of the user like the predetermined time period. Specifically, in an embodiment using both of the predetermined time period and the second predetermined time period, the reference time setting unit 150 may set at least either the predetermined time period or the second predetermined time period depending on the outer information of the user sensed by the user information sensing unit 140.

Meanwhile, the outer information of the user can be used in a different manner. For example, if the user gets angry or cries while handling the input unit, it may be preferable to display an event corresponding to the feeling of the user rather than extracting an event depending on handling of the input unit or the predetermined time period. To this end, the outer information of the user is sensed through the user information sensing unit 140 first, and a response of the user is extracted based on the sensed outer information of the user. The response of the user may be a result of determining a feeling of the user grasped through a voice, a gesture and a facial expression of the user.

If the user expresses a light response within a range generally allowed in the society, such as a light smile, depression or the like, it may be proper to display an event depending on handling of the input unit or a predetermined time period. Accordingly, if a response of the user exceeding the generally allowed range, i.e. a threshold value, is sensed, the event extraction unit extracts a response event according to the response of the user. The case of exceeding the threshold value may be, for example, a case where a position of a user's hand moves out of a certain range (it is determined as a behavior throwing a punch), or a case where a special point is set on the lip and the special point moves out of a certain range (it is determined as a state of crying). The response event is an event extracted according to a response of the user, and for example, if the user is angry, an event that can sooth the anger corresponds to the response event.

However, since it is inappropriate to display a response event when the response of the user goes below the threshold value by displaying a response event or the like, the event expression unit may display the response event only for a third predetermined time period. After the third predetermined time period, an event is extracted and displayed depending on handling of the input unit and the predetermined time period. A threshold determination unit 160 extracts a response of the user based on the outer information of the user and determines whether or not the extracted response of the user exceeds the threshold value.

Meanwhile, the predetermined time period and the second predetermined time period may be applied in a different manner depending on inputted contents. For example, a comparatively short time is required between inputs made on the same screen, whereas if the screen is switched by inputting a screen turn over input, a procedure of finding a correct input button is required, and thus a comparatively long time is required until an additional input is made after the screen turn over input is inputted. Accordingly, it can be inappropriate to apply the same predetermined time period or the same second predetermined time period between inputs. Accordingly, the event extraction unit may adjust the predetermined time period or the second predetermined time period by analyzing time patterns between handlings of the input unit when the user completes handling the input unit.

A case where a user starts to handle the input unit is mainly described above. According to this, the user is induced to continuously handle the input unit by appropriately displaying events. However, the configuration described above focuses on inducing the user to continuously input by constantly sustaining interest of the user after the user initially made an input. That is, it only relates to sustaining interest after the user starts input, and it lacks of a factor for aggressively inducing the user to use the device.

Accordingly, in order to facilitate using the device by increasing the frequency of accessing the device, it needs to further actively guide the user to the position of the input unit, and to this end, a distance measurement unit 170 and a distance classification unit 180 of FIG. 1 are used.

The distance measurement unit 170 measures a distance to the user. The distance to the user is measured through various measurement methods such as a camera, an infrared sensor or the like.

The distance classification unit 180 classifies the distance measured by the distance measurement unit 170 into a persuasion stage section and a preparation stage section. The persuasion stage section is a distance section in which the user cannot handle the input unit, and the preparation stage section is a distance section in which the user may handle the input unit. The preparation stage section may be generally less than 0.5 meters in which the user can handle the input unit using a hand.

The distance classification unit classifies the distance into the persuasion stage section and the preparation stage section as described above since the object of the persuasion stage section is different from the object of the preparation stage section.

The object of the persuasion stage section is to persuade an unspecified user to approach the preparation stage section. Accordingly, if the user is positioned in the persuasion stage section, the event extraction unit extracts an event (an advertisement event) such as screaming or making a big gesture so that the user is informed of the existence of the device and have interest in the device.

On the other hand, the object of the preparation stage section is to persuade the user in the preparation stage section to start handling the input unit. Accordingly, in this case, the extraction unit preferably extracts an event (a persuasion event) such as a guidance voice, a greeting motion or the like for persuading the user to handle the input unit. Meanwhile, a plurality of users may be positioned in the preparation stage section, and in this case, it is preferable to specify only one user and display an event only to the specified user.

In the case where there is a plurality of events that can be displayed in the persuasion stage section and the preparation stage section respectively, if the user does not respond for a predetermined time period, a different event may be displayed. For example, if feeling 1 is displayed in the persuasion stage section and there is no user approaching the preparation stage section, feeling 2, 3, ... or the like different from feeling 1 can be displayed, for example, every 30 seconds. If the user enters the preparation stage section, feeling 'a' is displayed. If the input unit is not handled, feeling b, c, ... or the like different from feeling 'a' can be displayed, for example, every 20 seconds.

According to the aforementioned descriptions, an event is displayed without discriminating users, and it is possible to display an appropriate event by dividing users into male and female, seniors and children or the like. To this end, the outer information of the user should be sensed first. In the persuasion stage section, since the distance is long or a user is not specified, it is difficult and meaningless to sense the outer information of the user. Accordingly, it is preferable to sense the outer information of the user through the user information sensing unit 140.

At this point, the event storage unit stores one or more events recognizable by the user, in which the events are classified into a plurality of event groups corresponding to the outer information of the user. For example, funny and cute events are stored in an event group corresponding to children, events feel like a woman are stored in an event group corresponding to male, and events feel like a man are stored in an event group corresponding to female.

The event extraction unit determines outer information of the user currently sensed by the user information sensing unit and selects a corresponding event group. Then, the event extraction unit extracts an event from the event group and displays the event through the event expression unit.

Meanwhile, the event extraction unit may persuade the user to approach and use the input unit by displaying either contents (an object) corresponding to the object of the input unit or a method of using the input unit. Since the contents displayed at this point may be inappropriate to be expressed through the event expression unit, the use inducing apparatus may further include a menu display unit 190 for displaying at least either the object of the input unit or the method of using the input unit. Generally, the menu display unit may be a display unit capable of displaying various characters and the like, and if the event expression unit includes the display unit, the menu display unit and the event expression unit may be formed in one body.

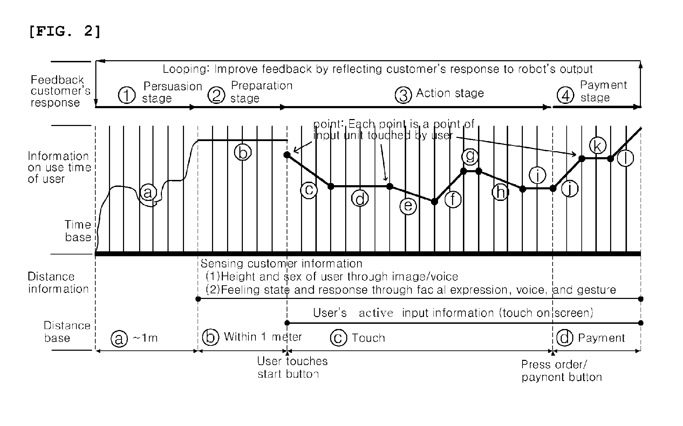

FIG. 2 is a view schematically showing an operation of a use inducing apparatus related to the present invention. Observing the figure, the operation includes a persuasion stage which displays an advertisement event to persuade an unspecified user positioned farther than a predetermined distance to approach the input unit, a preparation stage which displays a persuasion event to persuade the user positioned within the predetermined distance to use the input unit, and an action stage which extracts and displays an event stored in the event storage unit depending on sensed contents of the input unit when the user uses the input unit if the user has started using the input unit.

The persuasion stage is a stage performed when the user is positioned in the persuasion stage section, and in FIG. 2, it is expressed that there is no user within the range of 1 meter. At this point, the advertisement event can be randomly extracted and displayed. Since the advertisement event is aiming at a user positioned out of a predetermined distance, it may be an event expressing an attractive facial expression and a big gesture or expressing a loud emotional voice.

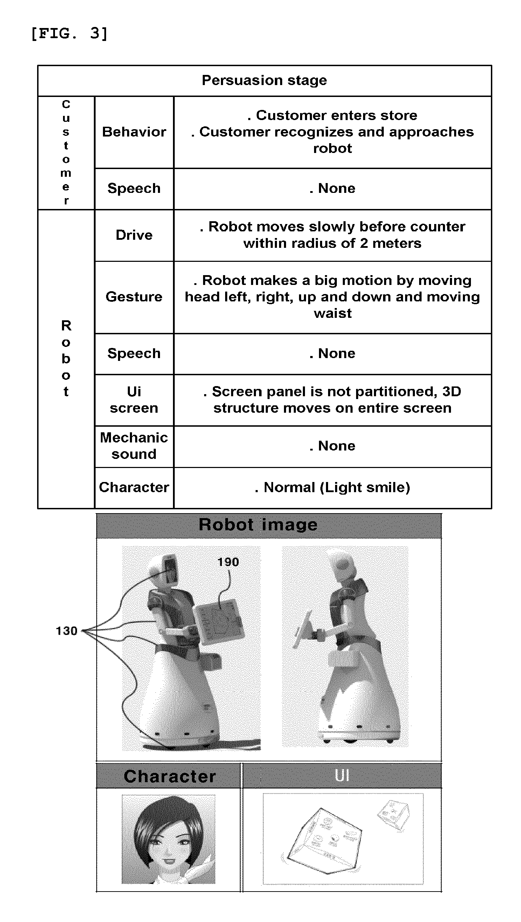

Specifically, referring to FIG. 3, wheels (including a driving engine), a face display unit, arms and a waist are configured as the event expression unit 130. Characters capable of expressing a facial expression are displayed on the face display unit. In addition, the menu display unit 190 is configured in the form of being supported by the arms. A menu UI that the user may select is displayed on the menu display unit.

In the persuasion stage, the wheels are driven and the event expression unit moves slowly within 2 meters, and the face display unit and the waist move widely. If output of the emotional voice is too high, it can be a noise, and thus the emotional voice is not expressed. Since the user is persuaded to approach by a gesture, a light smile is expressed as the facial expression. According to the operation like this, customers visiting the store recognize and approach the robot.

The preparation stage is a stage performed when the user is positioned in the preparation stage section. Although it is shown that the same event is expressed in FIG. 2, the event can be changed at regular time intervals. In addition, since outer information of the user (sensing customer information) can be grasped in the preparation stage section, different events can be expressed depending on a situation such as a case where a response of the user extracted on the basis of the outer information of the user exceeds a threshold value. In this case, the threshold determination unit described above can be used.

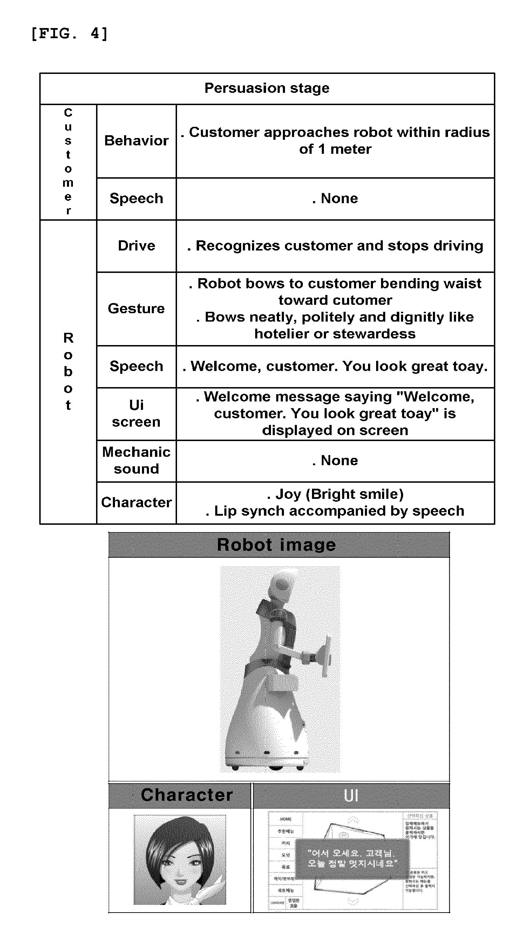

Referring to FIG. 4 as a specific example, as the user approaches the robot, the wheel driving is stopped. If needed, the robot turns around to face the customer. The robot bends the waist toward the customer and bows to the customer expressing an emotional voice saying 'Welcome customer, you look great today', and outputs contents of the emotional voice as characters. As described, the menu display unit can be used as the event expression unit. The facial expression expresses a bright smile to express joy. After the greeting, the menu display unit is pushed toward the customer so that the customer may use the input unit (in the embodiment, the menu display unit functions as a touch screen and is combined with the input unit as a single body).

The action stage is a stage starting from a point where the user initially handles the input unit in the preparation state. Black points shown in the action stage of FIG. 2 are time points where the user handled the input unit. Referring to FIG. 2, the steps are progressed such that event c is displayed when the input unit is initially handled, and event d is displayed when the input unit is handled next time. If the time interval between touches (when the input unit is a touch screen) exceeds a predetermined time period, another event may be outputted. For example, if the next touch is not sensed for a predetermined time period while event c is displayed by the initial touch, event c' different from currently displayed event c can be extracted and displayed. In addition, outer information of the user and response can be fed back to the displayed event using the user information sensing unit, the reference time setting unit and the threshold determination unit. This is the same as described above, and thus details thereof will be omitted.

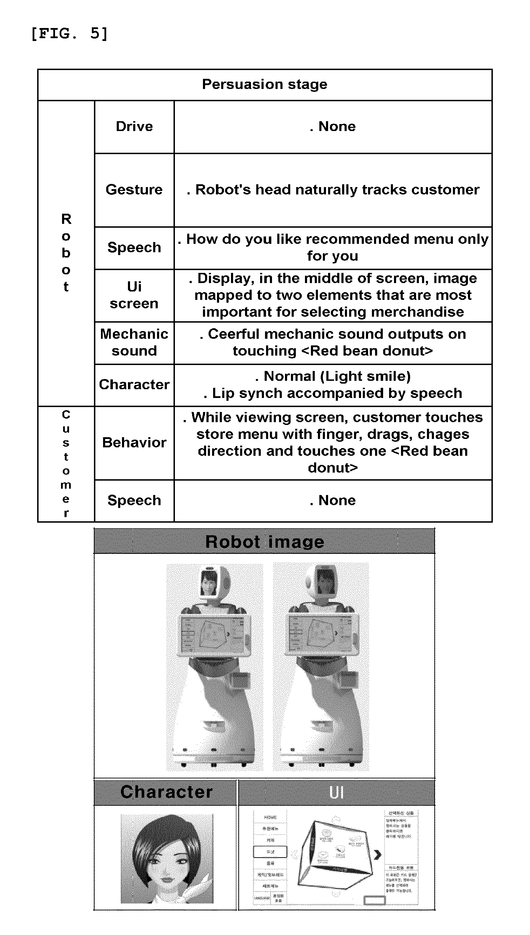

Referring to FIG. 5 as a specific example, the face display unit keeps tracking the customer to give a feeling that the robot sees the customer. When the customer touches the input unit, an emotional voice (a cheerful mechanic sound) is expressed, and at this point, the mechanic sound may be different for each touch. In addition, a different facial expression can be displayed instead of the light smile when the input unit is touched.

In addition, a payment stage can be further included after the action stage. If the input unit does not support payment, event display is terminated in the action stage, and the flow returns to the persuasion stage. It is since that if payment is not supported, the user selects a menu or the like through the input unit and gets out of the input unit.

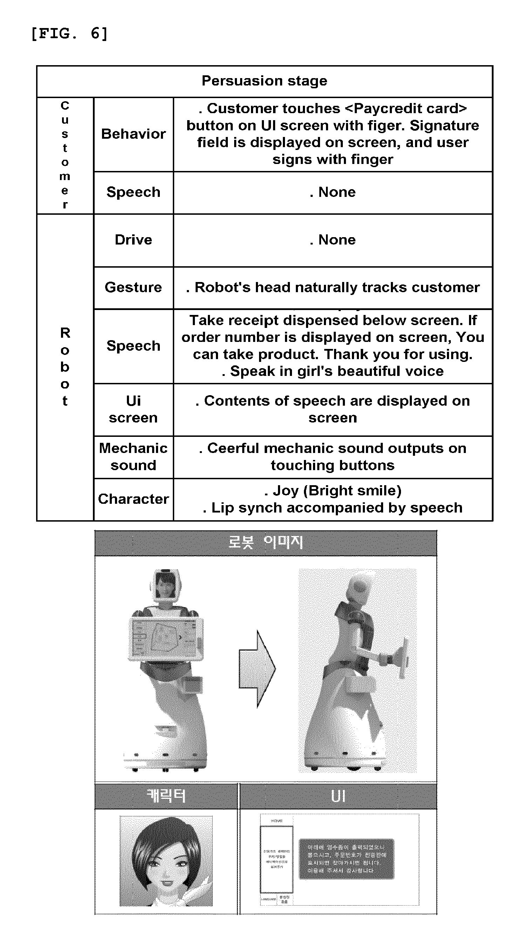

There is a case where the input unit can be used as a payment means, and the operation in this case is similar to that of the action stage. That is, when the user uses the input unit as a payment means in order to make a payment, an event stored in the event storage unit is extracted and displayed depending on contents sensed by the input unit. Even in this case, the predetermined time period and the second predetermined time period can be applied, and the outer information of the user and response can be fed back and used for displaying an event. FIG. 6 shows a specific example, and the displayed event is similar to the event shown in FIG. 4.

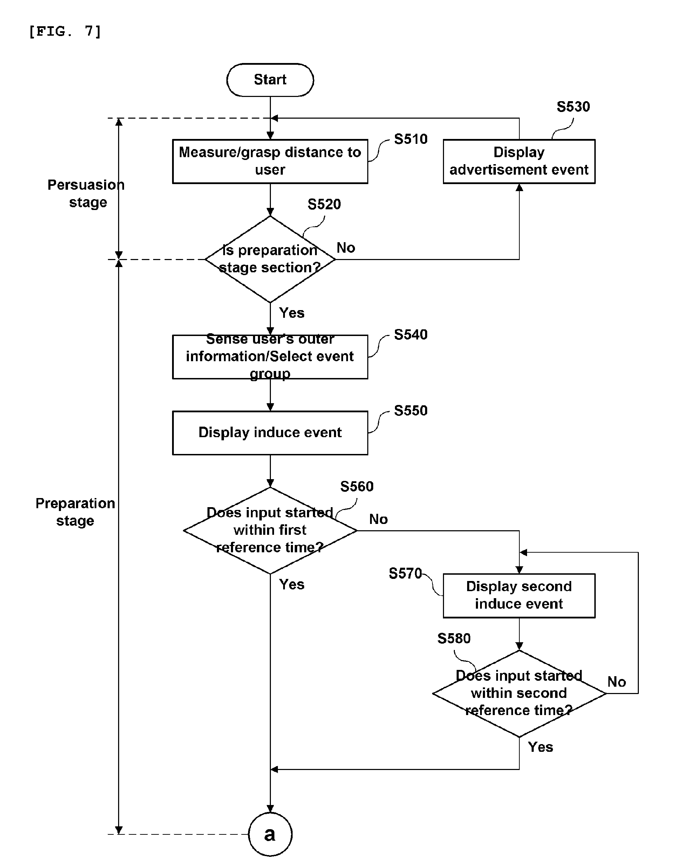

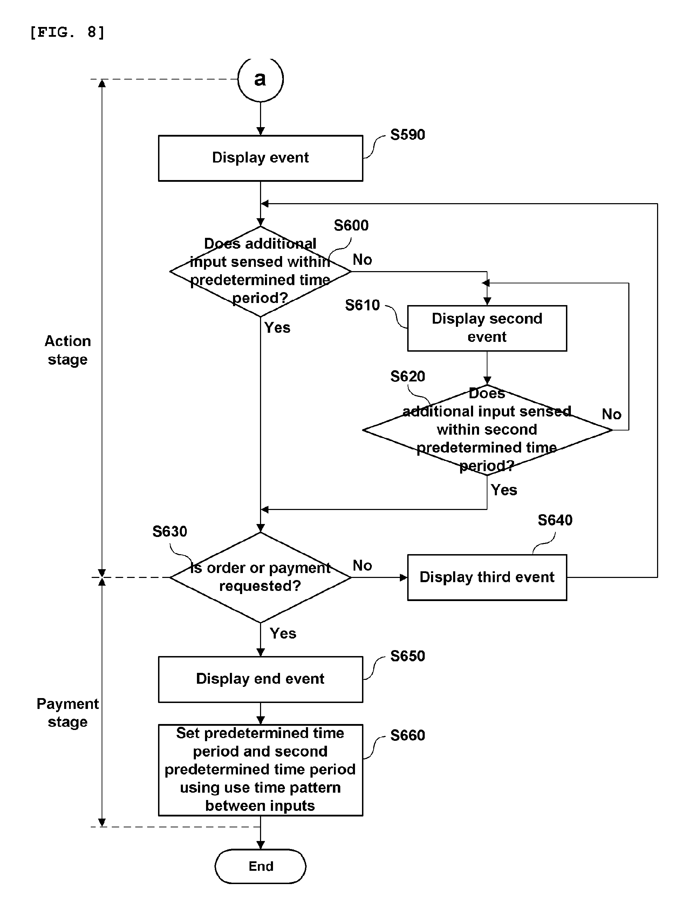

Meanwhile, FIGS. 7 and 8 are flowcharts illustrating a use inducing method related to the present invention.

First, a) if a user input is sensed, an event (a third event) stored in the event storage unit is extracted and displayed depending on the sensed contents S590 and S640, b) if an additional user input is not sensed for a predetermined time period after the user input is sensed S600, an event (a second event) different from the displayed event is extracted and displayed S610. The event in step S590 is an event extracted when the input unit is initially handled in the preparation stage, and the event in step S640 is an event extracted when the input unit is additionally handled in the action stage.

According to this, the user can be stimulated to continuously handle the input unit. Here, the additional contents are as described below.

After step b), an event (a second event) different from the event displayed through the event expression unit is extracted and display at a time point when a second predetermined time period expires S600 at every second predetermined time periods S620 after the predetermined time period is elapsed. The second event is an event different from a currently displayed event extracted by the predetermined time period or the second predetermined time period, and the third event is an event different from an event currently displayed by an additional input of the user. The third event may be an event the same as the currently displayed event.

The steps described above are performed in the action stage, and the steps described below can be added for the persuasion stage and the preparation stage.

Before step a), a distance to the user is measured S510, and if the measured distance is in the persuasion stage section S520, an advertisement event is displayed S530.

If the measured distance is in the preparation stage section S520, a persuasion event is displayed S550. Meanwhile, an event extracted after the preparation stage may take into account outer information of the user. Event groups corresponding to the outer information of the user are described above, and in order to apply the event groups, after determining that the measured distance is in the preparation stage section, outer information of the user is sensed, and an event group corresponding to the sensed outer information of the user is selected S540.

If the user does not start to handle the input unit in the preparation stage section, a persuasion event displayed to persuade the user to handle the input unit can be changed. To this end, a first reference time period and a second reference time period are set, if an input is not sensed within the first reference time period S560, a second persuasion event different from the currently displayed persuasion event is displayed S570. In addition, if the second reference time period expires after the first reference time period elapsed S580, also the second persuasion event is displayed S570. Since the second persuasion event is a persuasion event different from the currently displayed persuasion event, a persuasion event different from the current persuasion event is displayed at every second reference time periods until the user input is started.

Meanwhile, if use of the user is completed after step b), a time pattern between the user inputs are analyzed, and the predetermined time period can be set using a result of the analysis S660. In the case where a step of displaying an event using the second predetermined time period exists after step b), if the use of the device by the user is completed after the step of displaying an event using the second predetermined time period, a time pattern between the user inputs are analyzed, and at least either the predetermined time period or the second predetermined time period can be set using a result of the analysis S660.

The use of the device is completed if an order is placed or a payment is requested through the input unit S630. There is a case where the user does not input for a predetermined time period, which is a case where the user does not normally complete using the device and gets out of the input unit S650.

While the present invention has been described with reference to the particular illustrative embodiments, it is not to be restricted by the embodiments but only by the appended claims. It is to be appreciated that those skilled in the art can change or modify the embodiments without departing from the scope and spirit of the present invention.

### INDUSTRIAL APPLICABILITY

The present invention can be applied to an apparatus for inducing approach of a user to accomplish a certain object such as a menu order and persuading the user to select an item of the menu through an input unit.

Specifically, the present invention can be applied to a robot or a kiosk installed in a business store where users are required to visit, such as a restaurant, a convenience store or the like.

## Claims

1. An apparatus for inducing use, the apparatus comprising:
an input unit for receiving a user input;
an event storage unit for storing a plurality of events recognizable by a user;
an event extraction unit for extracting one of the events stored in the event storage unit if the user input is sensed at the input unit; and
an event expression unit for displaying the event extracted by the event extraction unit to the user, wherein
the event extraction unit extracts an event different from an event displayed through the event expression unit at a time point where the user input is sensed.

2. The apparatus according to claim 1, wherein the event extraction unit selects and extracts the event depending on input contents of the user.

3. The apparatus according to claim 1, wherein if an additional user input is not sensed for a predetermined time period after the user input is sensed, the event extraction unit extracts an event different from the event displayed through the event expression unit at a time point where the predetermined time period expires.

4. The apparatus according to claim 3, further comprising:
a user information sensing unit for sensing outer information of the user; and
a reference time setting unit for setting the predetermined time period depending on the sensed outer information of the user.

5. The apparatus according to claim 3, wherein the event extraction unit extracts an event different from the event displayed through the event expression unit at a time point when a second predetermined time period expires at every second predetermined time periods after the predetermined time period is elapsed.

6. The apparatus according to claim 5, further comprising:
a user information sensing unit for sensing the outer information of the user; and
a reference time setting unit for setting at least either the predetermined time period or the second predetermined time period depending on the sensed outer information of the user.

7. The apparatus according to any one of claims 1, 2, 3 and 5, further comprising:
a user information sensing unit for sensing the outer information of the user; and
a threshold determination unit for extracting a response of the user based on the sensed outer information of the user, and determining whether or not the response of the user exceeds a threshold value, wherein
the event extraction unit extracts a response event depending on the response of the user if the response of the user exceeds the threshold value, and
the event expression unit displays the response event for a third predetermined time period.

8. The apparatus according to any one of claims 1, 2, 3 and 5, further comprising:
a distance measurement unit for measuring a distance to the user; and
a distance classification unit for classifying the distance measured by the distance measurement unit into a persuasion stage section corresponding to a distance section in which the user cannot handle the input unit and a preparation stage section corresponding to a distance section in which the user may handle the input unit, wherein
the event extraction unit extracts an event for guiding an unspecified user to the preparation stage section from the persuasion stage section and extracts an event for specifying a user and persuading the user to use the input unit in the preparation stage section.

9. The apparatus according to claim 8, further comprising:
a user information sensing unit for sensing outer information of the user in the preparation stage section, wherein
the event storage unit classifies and stores one or more events recognizable by the user into a plurality of event groups corresponding to the outer information of the user, and the event extraction unit selects an event group corresponding to the sensed the outer information of the user and extracts an event stored in the selected event group.

10. The apparatus according to claim 8, further comprising:
a menu display unit for displaying at least either contents corresponding to an object of the input unit or a method of using the input unit.

11. The apparatus according to claim 10, wherein the menu display unit is formed together with the event expression unit as a single body.

12. A method of inducing use, which automatically provides an event for inducing a user to use a certain device, the method comprising:
a persuasion stage of displaying, on an event expression unit, an advertisement event for persuading an unspecified user positioned farther than a predetermined distance to approach an input unit;
a preparation stage of displaying, on the event expression unit, a persuasion event for persuading a user positioned within the predetermined distance to use the input unit; and
an action stage of extracting and displaying, on the event expression unit, an event stored in an event storage unit depending on sensed contents of the input unit when the user uses the input unit if the user has started using the input unit.

13. The method according to claim 12, wherein the action stage extracts and displays an event different from a currently displayed event on the event expression unit if the user does not make an additional input for the predetermined time period.

14. The method according to claim 12, further comprising, after the action stage, a payment stage of extracting and displaying an event stored in the event storage unit on the event expression unit depending on sensed contents of the input unit when the user uses the input unit as a payment means in order to make a payment.

15. A method of inducing use, which automatically provides an event for inducing a user to use a certain device, the method comprising the steps of:
a) extracting and displaying an event stored in an event storage unit on an event expression unit depending on sensed input of the user if a user input is sensed; and
b) extracting and displaying an event different from the displayed event on the event expression unit if an additional user input is not sensed for a predetermined time period after the user input is sensed,

16. The method according to claim 15, further comprising, after step b), the steps of extracting an event different from the event displayed through the event expression unit at a time point when a second predetermined time period expires at every second predetermined time periods after the predetermined time period is elapsed, and displaying the extracted event.

17. The method according to claim 15, further comprising, before step a), the steps of:
measuring a distance to the user by a distance measurement unit; and
displaying an advertisement event on the event expression unit if the distance measured is in a persuasion stage section, and displaying an persuasion event on the event expression unit if the distance measured is in a preparation stage section.

18. The method according to claim 15 or 17, further comprising, after step b), if use of the user is completed, analyzing a time pattern between the user inputs by a reference time setting unit, and setting the predetermined time period based on a result of the analysis.

19. The method according to claim 16, further comprising, after the step of displaying an event using the second predetermined time period, if use of the user is completed, analyzing a time pattern between the user inputs by the reference time setting unit, and setting at least either of the predetermined time period or the second predetermined time period based on a result of the analysis.
